**Europäisches Patentamt**

(19) **European Patent Office**

**Office européen des brevets**

(11) Publication number : **0 327 242 B1**

# (12) EUROPEAN PATENT SPECIFICATION

(45) Date of publication of patent specification :
20.05.92 Bulletin 92/21

(51) Int. Cl.⁵ : **C03B 9/40,** C03B 11/16

(21) Application number : **89300644.5**

(22) Date of filing : **24.01.89**

(54) **Individual section glass forming machine.**

(30) Priority : **05.02.88 US 152694**

(43) Date of publication of application :
**09.08.89 Bulletin 89/32**

(45) Publication of the grant of the patent :
**20.05.92 Bulletin 92/21**

(84) Designated Contracting States :
**DE FR GB IT**

(56) References cited :
**DE-A- 3 151 521
DE-A- 3 248 266
US-A- 4 613 352
US-A- 4 662 923**

(73) Proprietor : **Emhart Glass Machinery
Investments Inc.
c/o RL&F Service Corp. One Rodney Square,
10th Floor 10th and King Streets
Wilmington, Delaware 19801 (US)**

(72) Inventor : **Pinkerton, Steven James
55 Revere Drive
Ridgefield Connecticut 06877 (US)**

(74) Representative : **Wetters, Basil David Peter et
al
Emhart Patents Department Lyn House 39 The
Parade
Oadby, Leicester LE2 5BB (GB)**

## Description

The present invention relates to the simultaneous forming of gobs of molten glass into parisons in a multi gob individual section glass forming machine.

A multi gob individual section glass forming machine comprises a number of sections each having a selected number, usually, 2, 3 or 4, of parison mould assemblies. In the operation of the machine gobs of molten glass are provided to mould cavities of the mould assemblies, and are formed into parisons by plungers which move into the mould cavities to press the molten glass into the required parison shape.

To ensure the optimum formation in the machine of glass containers, it is desirable that the condition of all the parisons when they leave the mould assemblies of a section to be blown into a final container is the same, and this requires that movement of the plungers associated with each of the mould cavities is carefully controlled.

US-A-4662923 discloses a plunger mechanism for use in forming a gob of molten glass into a parison comprising a plunger displaceable into a mould cavity to form a parison, piston and cylinder means to displace the plunger, and control means, responsive to a feed back device for ensuring that the plunger moves according to a predetermined position against time curve. The document does not discuss the question of controlling plungers in a multi gob machine, and it is not clear therefore whether in such a machine each plunger would move according to its own position against time curve or all plungers would move according to the same position against time curve. However, because the position against time curve is predetermined, no allowance is made for differences between conditions in the various mould cavities which may occur, ans it is not possible to ensure over a long period of time that the condition of all the parisons when they are removed from the mould cavities of a section are the same.

DE-A-3248266 also describes control of the movement of a plunger in a parison forming operation, but only in very general terms, and gives no consideration to the problem of obtaining consistent conditions of the formed parisons in a multi gob machine.

It is an object of the present invention to improve the uniformity of the product made by multi gob, individual section, glass forming machines.

It is found that when a plunger is moved into the glass in a mould cavity, it moves fairly rapidly into the cavity with slightly reducing speed until it reaches a point (the parison formation point) after which it moves with a much reduced constant, velocity. It is believed that the parison formation point indicates when the mould is filled, and that the reduced, constant, velocity indicates shrinkage of the glass on cooling.

If, in a multi gob machine, the rate of cooling of the mould cavities are all the same, parisons of consistent temperature may be obtained if the parisons are al formed at the same time - that is to say if che parison formation points are synchronized.

If, however, the rates of cooling of the mould cavities differ, then by appropriate offsetting of the parison formation points, parisons of consistent temperature may be obtained.

The present invention provides a multi gob, individual section, glass forming machine, in which each individual section comprises a plurality of parison mould assemblies each having a mould cavity and a plunger displaceable from a retracted position to a fully inserted position into the mould cavity; piston and cylinder means for displacing each plunger from its retracted to its fully inserted position; a plunger displacement starter for initiating the movement of the piston and cylinder means for each plunger at a predetermined time; sensing means for sensing the actual position of each of the plungers throughout at least the last portion of its displacement, such last portion including displacement to a parison formation point when the mould cavity is completely full of glass, and further to the fully inserted position as the formed parison cools, characterized in that the machine also comprises a Plunger Controller for each plunger which determines when said plunger is located at its parison formation point and issues a parison formation point signal and a Start Time Offset for each plunger displacement starter which enables the starting times of each plunger displacement starter to be set so that the parison formation points of all the plungers are synchronized to obtain consistent temperatures of the parisons.

Preferably in a machine according to the invention the Plunger Controller comprises a synchronization offset Generator which receives the parison formation point signals from each plunger and computes the difference in time between the first received parison formation point signal and other subsequent parison formation point signals in the same cycle (the Start Time Offset) and sets the starting times for the plungers in the next succeeding cycle by the Start Time Offset, thus to synchronize the parison formation points.

If a machine according to the invention is one in which the cooling rates of the mould cavities differ, preferably the machine also comprises means which enables any one of the parison formation point signals to be offset, whereby to obtain consistent temperatures of the parison when the cooling rates of the mould assemblies vary.

The following drawings illustrate a preferred embodiment of the invention.

Referring to the drawings:

Figure 1 is a diagrammatic view of one of the parison mould assemblies of an individual section, glass forming machine;

Figure 2 is a schematic illustration of a triple gob, individual section, glass forming machine;

Figure 3 is a graph illustrating the final portion of the movement of the mould assembly plunger in forming a parison;

Figure 4 is a graph illustrating the final temperature of parisons resulting from alternate paths of plunger movement during this final parison of movement; and

Figure 5 is a graph illustrating the final temperature of parisons resulting from other alternate paths of plunger movement during this final portion of movement.

A glassware forming machine of the individual section, multi-gob type, has a number of individual sections each having a selected number (usually 2, 3 or 4) of parison mold assemblies 10 for simultaneously forming a corresponding number of parisons. Each of these mold assemblies 10 includes two mold halves 11 which are movable between an advanced position where they engage one another and other parts of the mold assembly to form a mold cavity 12 and a retracted position where the mold halves 11 are spaced to permit removal of a formed parison. A neck ring 14 cooperates with the mold halves 11 to define the cavity 12 and is arranged to grip the neck portion of a formed parison so that the parison can be transferred from the mold cavity to a blow mold. A baffle 16, movable into a position on top of the engaging mold halves 11, defines the upper surface of the mold cavity and is moved to a remote location prior to parison removal.

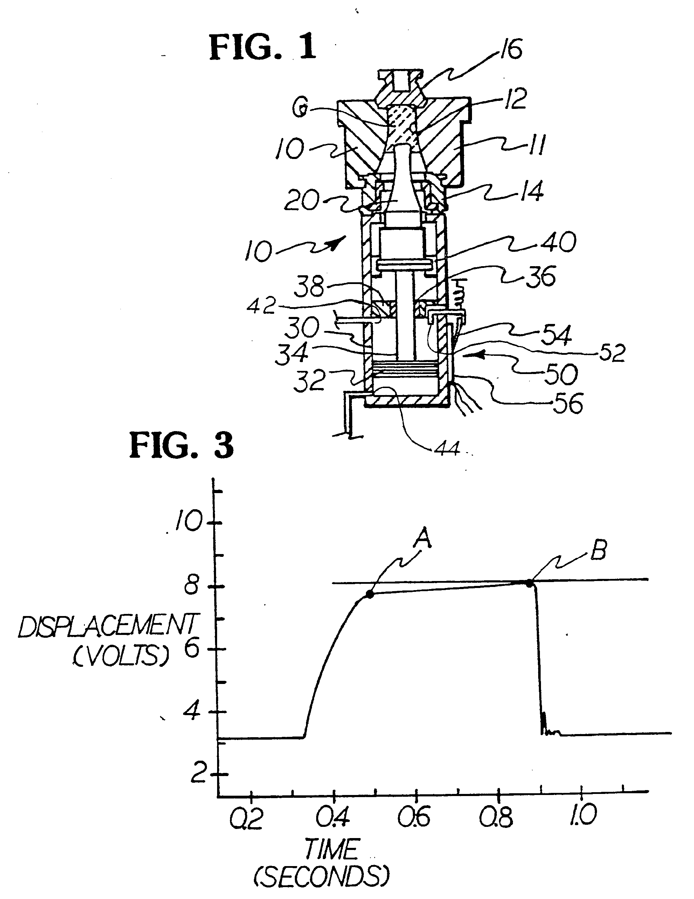

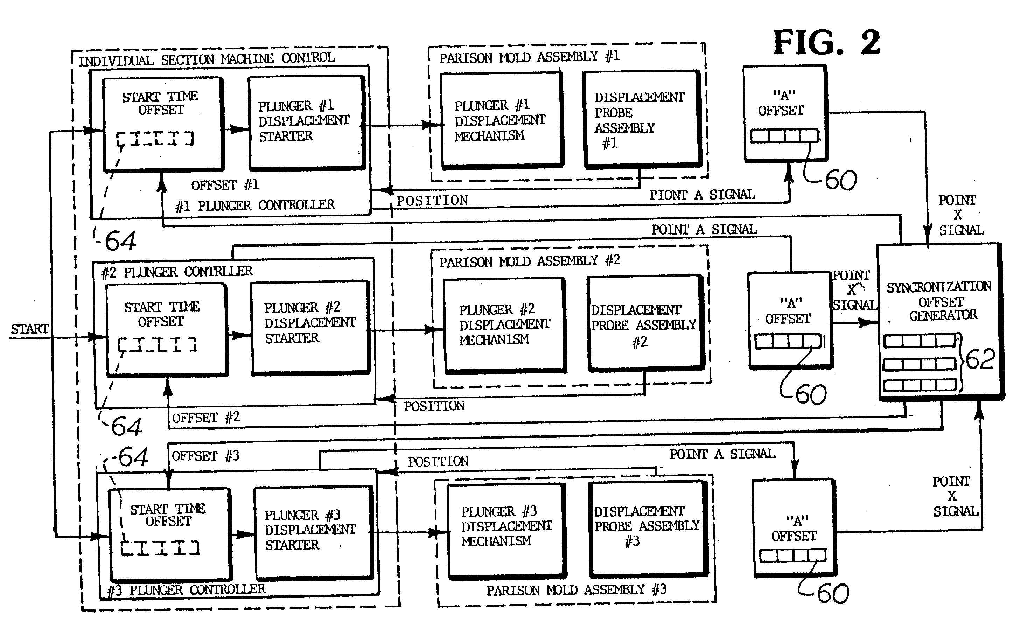

Each mold assembly also has a plunger mechanism including a plunger 20. The plunger 20 is first moved from its out-of-the-way position to its intermediate position where the plunger projects upwardly into the mold cavity. A gob of molten glass is dropped into the mold cavity 12 and rests on the plunger 20. The plunger is then advanced under a constant feed pressure from this intermediate position to press the glass against the walls of the cavity 12 to form the parison. In Figure 1 the plunger is shown during its advancement from the intermediate position to its fully advanced position. The plunger is then retracted to its intermediate position by cutting the feed pressure and applying a retract pressure and then retracted from the intermediate position to the out-of-the-way position to allow for removal of the parison.

The plunger mechanism also has a cylinder 30, a piston 32 movable in the cylinder 30, and a piston rod 34 projecting from the piston 32 through a seal 36 in an upper end cap 38 of the cylinder 30. The plunger 20 is mounted on an upper end portion of the piston rod 34 by a clamping ring 40. Pressurized hydraulic fluid introduced into the cylinder 30 through an upper entry port 42 causes the piston 32 to move downwards in the cylinder 30, and the introduction of the fluid through port 44 causes the piston 32 to move upwardly in the cylinder 30.

As can be seen from Figure 2, each parison mold assembly also has a Plunger Displacement Mechanism (a valving arrangement which can alternately apply the feed and retract pressures to the appropriate cylinder ports 42, 44). The time when each pressure is applied is defined by a Plunger Displacement Starter and the other control parameters such as duration of application are controlled by a Plunger Controller (the plunger controllers are a part of the Individual Section Machine Control).

It is within the last 9,525 mm (3/8″) of plunger stroke that the mold cavity becomes completely filled in the narrow neck press and blow parison forming process. To track the displacement of each plunger throughout this portion of the stroke, each Parison Mold Assembly includes a Displacement Probe Assembly having a linear potentiometer 50 (Figure 1) secured to the plunger housing 30. As a plunger is displaced through this 9,525 mm (3/8″), the piston 32 of that plunger will engage and displace a probe 52 to which is secured the potentiometer wiper 54. The displacement of this wiper 54 along the potentiometer element 56 changes the output of the linear potentiometer.

Figure 3 illustrates a plot of plunger displacement (voltage), as sensed by the probe, versus time, zero seconds being when the Plunger Displacement Starter commences plunger displacement (fires "plunger-up" solenoid, for example). This plot reveals a linear or constant velocity region between points A and B. Since the pressure is constant during this plunger advancement, the force exerted on the glass by the plunger remains constant. It is believed that point A is the point where the mold cavity has completely filled (the parison formation point) and that from point A to point B, the glass is cooling, and hence, shrinking.

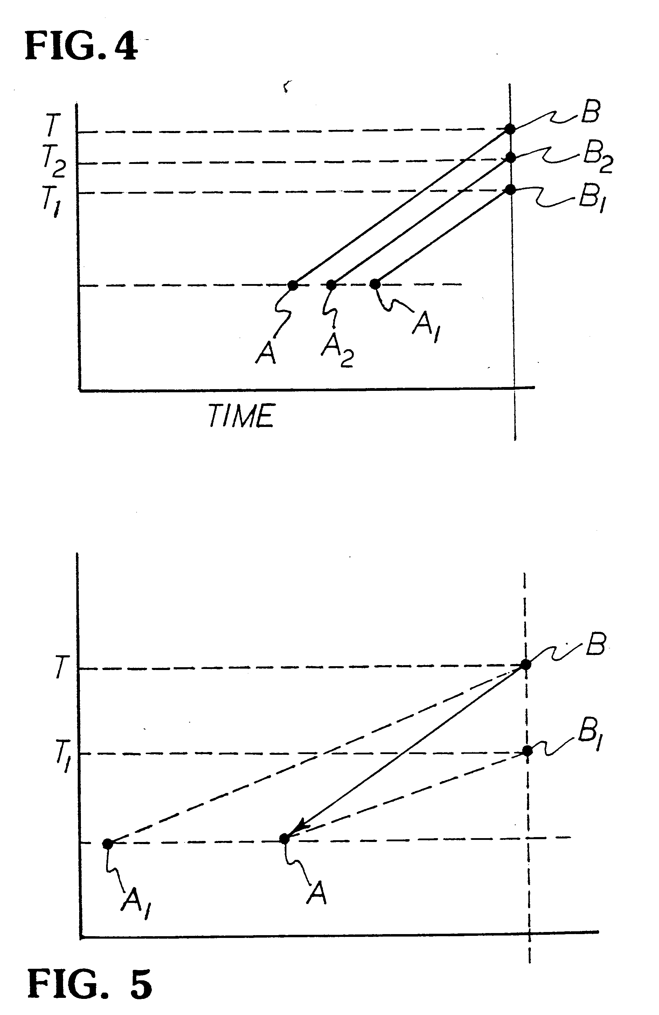

Point B corresponds to the time when the Plunger Controller commences plunger retraction (fires "plunger-down" solenoid, for example). At this time, the parison has a specific temperature T (see Figure 4). Accordingly, if one plunger reaches Point A behind schedule (A1 or A2), that parison will cool for a shorter period of time and the parison temperature (T1 or T2) will be higher than the temperature T of the third parison that has cooled from point A. Assuming that the three gobs, which are formed into these three parisons are identical, Point A is the time when all the parisons should be formed if they are all to cool to the desired temperature T when the plunger is retracted at Point (time) B. This also assumes that all three parisons cool at the same rate.

The Plunger Controller for each plunger, Which receives positional data from its associated Displacement Probe Assembly determines when Point A has been reached (has determined that the displacement curve has become linear), and supplies this data to a Synchronization Offset Generator which determines the time differences between the three Position A Signals.

The Synchronization Offset Generator then supplies time offsets (negative) to the Start Time Offset for the Plunger Controllers for the two plungers which arrived at their Point A after the third plunger arrived at its Point A. These offsets accordingly synchronize the plungers (assure that all three plungers reach the parison formation point at the same time). These offsets are updated every cycle to adjust for pressure or other variations.

The slope of the section from Point A to Point B may not, however, be the same for all of the parison mold assemblies. Referring to Figure 5, if the cooling rate for the middle mold in a triple gob individual section machine cools at a slower rate than an outer mold, the slope of this section may be AB for an outer mold and AB1 for the middle mold. The temperature T of the outer parisons will accordingly be less than the temperature T1 of the middle parison. To increase or decrease the cooling time of a mold so that the mold will cool to Point B, "A offsets" can be selectively programmed via suitable thumb wheel switches 60. The feed cycle for this middle plunger can accordingly be advanced relative to the outer mold so that this section will conform to section A1B, rather than section AB1, and hence, will cool to temperature T rather than to temperature T1.

The Synchronization Offset Generator compares signals (Point X Signals), which should arrive at the same time. These signals will be Point A Signals when no A Offsets have been defined. As a result, A offsets can be set without altering the operation of the Synchronization Offset Generator.

The Synchronization Offset Generator includes Position X readouts 62, which in a manual system, can be relied on by an operator to define the Offsets which can be inputted into the start time offsets via conventional thumb wheel switches or the like 64.

## Claims

1. A multi gob, individual section, glass forming machine, in which each individual section comprises,
   a plurality of parison mould assemblies (10) each having a mould cavity and a plunger (20) displaceable from a retracted position to a fully inserted position into the mould cavity ;
   piston and cylinder means for displacing each plunger from its retracted to its fully inserted position ;
   a plunger displacement staster for initiating the movement of the piston and cylinder means for each plunger at a predetermined time ;
   sensing means (50) for sensing the actual position of each of the plungers (20) throughout at least the last portion of its displacement, such last portion including displacement to a parison formation point when the mould cavity is completely full of glass, and further to the fully inserted position as the formed parison cools,
   characterized in that the machine also comprises a Plunger Controller for each plunger which determines when said plunger is located at its parison formation point and issues a parison formation point signal and a Start Time Offset for each plunger displacement starter which enables the starting times of each plunger displacement starter to be set so that the parison formation points of all the plungers are synchronized to obtain consistent temperatures of the parisons.

2. A multi gob, individual section glass forming machine according to claim 1, characterized in that the Plunger Controller comprises a synchronization offset Generator which receives the parison formation point signals from each plunger and computes the difference in time between the first received parison formation point signal and other subsequent parison formation point signals in the same cycle (the Start Time Offset) and sets the starting times for the plungers in the next succeeding cycle by the Start Time Offset, thus to synchronize the parison formation points.

3. A multi gob individual section glass forming machine according to claim 2 characterized in that it also comprises means (60) which enables any one of the parison formation point signals to be offset, whereby to obtain consistent temperatures of the parison when the cooling rates of the mould assemblies vary.

## Patentansprüche

1. IS-Glasformmaschine, bei welcher jede individuelle Sektion
   eine Vielzahl von Külbchen-Formanordnungen (10), die je einen Formhohlraum und einen Plunger (20) einschließen, welcher aus einer zurückgezogenen Lage in eine Lage in dem Formhohlraum verschiebbar ist, in welcher er in letztere vollständig eingesetzt ist,
   eine Kolben- und Zylindereinrichtung zum Verschieben des Plungers aus seiner zurückgezogenen in seine Einsatzlage,
   einen Plngerverschiebungs-Starter zum Einleiten der Bewegung der Kolben-und Zylindereinrichtung für jeden Plunger zu einer bestimmten Zeit,
   und eine Fühleinrichtung (50) zum Erfassen der tatsächlichen Position eines jeden Plungers (20) über wenigstens den letzten Abschnitt seiner Verschiebung umfaßt, wobei dieser letzte Abschnitt das Verschieben zu einem Külbchen-Formationspunkt, wenn der Formhohlraum vollständig mit Glas gefüllt ist und weiter zu der Position, in welcher er vollständig eingesetzt ist, wenn sich das geformte Külbchen abkühlt,

**dadurch gekennzeichnet**, daß ein Plunger-Kontroller für jeden Plunger vorgesehen ist, welcher bestimmt, wann sich der Plunger in seinem Külbchen-Fromations-punkt befindet und ein Külbchen-Formationspunktsignal abgibt, und daß eine Startzeit-Verlagerung für jeden Plunger-Verschiebungstarter vorhanden ist, welcher es ermöglicht, daß die Startzeichen eines jeden Plungerverschiebungsstarters einstellbar sind, so daß die Külbchen-Formationspunkte aller Plunger zum Erzielen konsistenter Temperaturen der Külbchen synchronisiert sind.

2. IS-Glasformmaschine nach Anspruch 1, dadurch gekennzeichnet, daß der Plungerkontroller einen Synchronisation-Verlagerung-Generator einschließt, welcher die Külbchen-Formationspunktsignale von jedem Plunger empfängt und die Zeitdifferenz zwischen dem zuerst empfangenen Külbchen-Formationspunktsignal und weiteren fölgenden Külbchen-Formationspunksignalen in dem gleichen Zyklus (Startzeitverlagerung) berechnet und die Startzeiten der Plunger in dem nächsten folgenden Zyklus über die Startzeitverlagerung einstellt, um somit die Külbchen-Formationspunkte zu synchronisieren.

3. IS-Maschine nach Anspruch 4, gekennzeichnet durch eine Einrichtung (60), welche das Versetzen eines der Külbchen-Formationspunktsignale gestattet, um konsistente Temperaturen der Külbchen zu erhalten, wenn die Abkühlgeschwindigkeiten der Formanordnungen variieren.

## Revendications

1. Machine à mouler le verre à sections individuelles multiparaison, dans laquelle chaque section individuelle comprend :

une pluralité d'ensembles moules ébaucheurs (10) dont chacun possède une cavité de moulage et un plongeur (20) qui peut se déplacer d'une position rétractée à une position entièrement enfoncée dans la cavité de moulage ;

des moyens à piston et cylindre cervant à faire passer chaque plongeur de sa position rétractée à sa position entièrement enfoncée,

un organe de démarrage du déplacement du plongeur, servant à déclencher le mouvement des moyens à piston et cylindre pour chaque plongeur à un instant prédéterminée ;

des moyens capteurs (50), destinés à capter la position réelle (20) de chacun des plongeurs sur au moins toute la dernière partie de son déplacement, cette dernière partie comprenant le déplacement aboutissant à un point de formation de l'ébauche, au moment où la cavité de moulage est entièrement remplie de verre et, ensuite, à la position entièrement enfoncée, pendant que l'ébauche se refroidit,

caractérisée en ce que la machine comprend aussi un Contrôleur de Plongeur pour chaque plongeur, qui détermine l'instant où ledit plongeur est situé à son point de formation de l'ébauche et émet un signal de point de formation de l'ébauche et un Décalage de l'Instant de Démarrage pour chaque organe de démarrage de déplacement du plongeur, qui permet de régler les instants de démarrage de tous les organes de démarrage de déplacement du plongeur de telle manière que les points de formation de l'ébauche de tous les plongeurs soient synchronisés, afin d'obtenir des températures uniformes dans les ébauches.

2. Machine à mouler le verre à sections individuelles multiparaison, caractérisée en ce que le Contrôleur de Plongeur comprend un Générateur de Décalage de la Synchronisation qui reçoit les signaux de point de formation de l'ébauche de tous les plongeurs et calcule la différence de temps entre le premièr signal de point de formation de l'ébauche reçu et d'autres signaux de point de formation de l'ébauche successifs compris dans le même cycle (le Décalage de l'Instant de Démarrage) et règle les instants de démarrage pour les plongeurs dans le cycle immédiatement suivant par le Décalage d'Instant de Démarrage, pour synchroniser ainsi les points de formation de l'ébauche.

3. Machine à mouler de verre à sections individuelles multiparaison selon la revendication 2, caractérisées en ce qu'elle comprend des moyens (60) qui permettent de décaler l'un quelconque des signaux de point de formation de l'ébauche, pour obtenir de cette façon des températures uniformes dans les ébauches lorsque les vitesses de refroidissement des ensembles de moules varient.

# FIG. 1

# FIG. 3

DISPLACEMENT (VOLTS)

TIME (SECONDS)

# FIG. 2

INDIVIDUAL SECTION MACHINE CONTROL

PARISON MOLD ASSEMBLY #1

START TIME OFFSET

PLUNGER #1 DISPLACEMENT STARTER

PLUNGER #1 DISPLACEMENT MECHANISM

DISPLACEMENT PROBE ASSEMBLY #1

"A" OFFSET

60

OFFSET #1

#1 PLUNGER CONTROLLER

POSITION

PIONT A SIGNAL

64

POINT A SIGNAL

POINT X SIGNAL

#2 PLUNGER CONTRLLER

PARISON MOLD ASSEMBLY #2

START

START TIME OFFSET

PLUNGER #2 DISPLACEMENT STARTER

PLUNGER #2 DISPLACEMENT MECHANISM

DISPLACEMENT PROBE ASSEMBLY #2

"A" OFFSET

POINT X SIGNAL

SYNCRONIZATION OFFSET GENERATOR

62

60

OFFSET #2

POSITION

64

OFFSET #3

POSITION

POINT A SIGNAL

64

START TIME OFFSET

PLUNGER #3 DISPLACEMENT STARTER

PLUNGER #3 DISPLACEMENT MECHANISM

DISPLACEMENT PROBE ASSEMBLY #3

"A" OFFSET

POINT X SIGNAL

#3 PLUNGER CONTROLLER

PARISON MOLD ASSEMBLY #3

60

EP 0 327 242 B1

7

EP 0 327 242 B1

## FIG. 4

## FIG. 5

8